# DEMANDE DE BREVET EUROPEEN

(11) **EP 3 609 050 A1**
(43) Date de publication de la demande: **12.02.2020**
(21) Numéro de dépôt: 19186603.7
(22) Date de dépôt: 16.07.2019
(51) Int. Cl.: H02J 50/10, H01F 38/14, E01C 1/00, H02J 50/90

(54) **SYSTÈME DE LIAISON ÉLECTRIQUE SANS CONTACT**

(30) Priorité: 07.08.2018 FR 1857366
(71) Demandeur: Commissariat à l'Énergie Atomique et aux Énergies Alternatives, 75015 Paris (FR)
(72) Inventeur: CHAINTREUIL, Nicolas, 38054 GRENOBLE cedex 9 (FR)
(74) Mandataire: GIE Innovation Competence Group

(57) **Abrégé**

L'invention concerne un système de liaison électrique sans contact comprenant un premier bloc (B1) portant un premier enroulement (E1) électrique et un deuxième bloc (B2) portant un deuxième enroulement (E2) électrique, le premier bloc (B1) délimitant un premier espace, dit espace supérieur et un deuxième espace, dit espace inférieur, dans lequel est placé ledit deuxième bloc (B2), ledit deuxième bloc (B2) étant destiné à être déplacé en translation suivant une direction principale par rapport audit premier bloc (B1) de transmission d'énergie sans contact dans ledit espace inférieur entre une position non fonctionnelle et une position fonctionnelle, dans laquelle une transmission d'énergie par couplage magnétique entre les deux enroulements peut être assurée. Le système comporte des moyens de traction du deuxième bloc (B2) de transmission d'énergie sans contact pour le déplacer suivant une direction de traction de sa position non fonctionnelle vers sa position fonctionnelle.

## Description

### Domaine technique de l'invention

La présente invention se rapporte à un système de liaison électrique sans contact.

### Etat de la technique

Un système de liaison électrique sans contact est réalisé en positionnant l'une par rapport à l'autre une première partie portant un enroulement primaire et une deuxième partie portant un enroulement secondaire de sorte que l'enroulement primaire et l'enroulement secondaire soient placés en vis-à-vis (à une distance suffisante l'un de l'autre), afin de réaliser un couplage magnétique.

Le document US2017/182903A1 décrit notamment une solution de charge sans-fil par induction pour véhicule électrique.

Pour assurer une liaison électrique sans contact fiable et avec un bon rendement, le positionnement relatif des deux enroulements doit être parfaitement réglé.

Dans certaines applications, il est cependant difficile de s'assurer du bon positionnement des deux enroulements l'un par rapport à l'autre. C'est le cas de toutes les applications où l'installation ou la désinstallation du système est réalisée à l'aveugle, c'est-à-dire sans accès manuel à la zone de liaison et sans l'emploi de capteurs de positionnement et/ou de guidage. L'une de ces applications est par exemple celle de panneaux ou dalles photovoltaïques positionnées sur une chaussée et fonctionnant par induction, c'est-à-dire avec transmission de l'énergie électrique produite par les cellules photovoltaïques du panneau vers le réseau à travers la liaison électrique sans contact.

Dans cette dernière application, la première partie comporte un bloc générateur d'énergie électrique de type photovoltaïque présentant une face externe destinée à capter l'énergie solaire et un bloc de transmission d'énergie sans contact comportant un coupleur inductif primaire doté de l'enroulement primaire et présentant une première surface de couplage située à l'opposé de ladite face externe. La deuxième partie est destinée à être reliée au réseau électrique par des câbles et comporte un bloc de transmission d'énergie sans contact comprenant un coupleur inductif secondaire doté de l'enroulement secondaire et présentant une deuxième surface de couplage. La deuxième partie est placée dans une cavité ou renfoncement de manière à présenter sa surface de couplage vers le haut de la cavité. La première partie vient se positionner au-dessus de la deuxième partie, de manière à présenter sa face externe vers l'extérieur de ladite cavité et sa surface de couplage vers l'intérieur de ladite cavité en vis-à-vis de ladite surface de couplage du coupleur inductif logé dans la cavité, pour assurer la liaison électrique sans contact. Dans une telle installation, une fois que la première partie vient recouvrir la deuxième partie située au fond de la cavité, il n'est plus possible d'accéder à cette deuxième partie et il n'est donc plus possible de régler son positionnement vis-à-vis de la première partie.

Le but de l'invention est donc de proposer un système de liaison électrique sans contact, permettant de palier les inconvénients de l'état de la technique, en réalisant une liaison électrique sans contact de manière fiable, même lorsque l'installation est réalisée à l'aveugle ou dans les conditions citées ci-dessus. La solution sera notamment avantageuse pour une installation de type photovoltaïque.

### Exposé de l'invention

Ce but est atteint par un système de liaison électrique sans contact comprenant un premier bloc de transmission d'énergie sans contact portant un premier enroulement électrique et un deuxième bloc de transmission d'énergie sans contact portant un deuxième enroulement électrique, le premier bloc de transmission d'énergie sans contact fermant une cavité dans laquelle est placé ledit deuxième bloc (B2) de transmission d'énergie sans contact, et délimitant un premier espace, dit espace supérieur, situé au-dessus du premier bloc de transmission d'énergie sans-contact et un deuxième espace, dit espace inférieur, formant ladite cavité et situé au-dessous du premier bloc de transmission d'énergie sans contact, ledit deuxième bloc de transmission d'énergie sans contact étant destiné à être déplacé en translation suivant une direction principale par rapport audit premier bloc de transmission d'énergie sans contact dans ledit espace inférieur entre une position non fonctionnelle et une position fonctionnelle, dans laquelle une transmission d'énergie par couplage magnétique entre les deux enroulements peut être assurée, ledit système comportant des moyens de traction du deuxième bloc de transmission d'énergie sans contact pour le déplacer de sa position non fonctionnelle vers sa position fonctionnelle, lesdits moyens de traction comportant au moins un organe de préhension situé dans ledit espace supérieur et au moins un dispositif de liaison reliant ledit organe de préhension audit deuxième bloc de transmission d'énergie sans contact situé dans ledit espace inférieur.

Selon une particularité, le premier bloc de transmission d'énergie sans contact comporte au moins un premier boîtier portant le premier enroulement et le deuxième bloc de transmission d'énergie sans contact comporte au moins un deuxième boîtier mobile portant le deuxième enroulement.

Selon une autre particularité, ledit premier boîtier est doté d'une ouverture et ledit dispositif de liaison comporte au moins un câble qui traverse ladite ouverture.

Selon une autre particularité, le système comporte des moyens de verrouillage de la translation dudit deuxième bloc de transmission d'énergie sans contact dans sa position fonctionnelle.

Selon une réalisation particulière, les moyens de verrouillage comportent un dispositif magnétique comprenant une première partie solidaire du premier bloc de transmission d'énergie sans contact et une deuxième partie solidaire du deuxième bloc de transmission d'énergie sans contact.

Selon une réalisation particulière, les moyens de verrouillage comportent une colle appliquée sur l'un et/ou l'autre des deux blocs de transmission d'énergie sans contact.

Selon une autre particularité, ledit organe de préhension est réalisé dans un matériau déformable de manière plastique.

Selon une autre particularité, le premier bloc de transmission d'énergie sans contact et le deuxième bloc de transmission d'énergie sans contact comportent des formes complémentaires d'emboîtement.

L'invention concerne également une infrastructure fonctionnalisée destinée à recouvrir une chaussée, et comportant un ou plusieurs modules générateur et/ou consommateur d'énergie électrique disposés de manière contigües pour former des dalles, ladite infrastructure comportant un système de liaison électrique sans contact tel que défini ci-dessus associé à chaque module, ledit premier bloc de transmission d'énergie sans contact est fixé au module et ledit deuxième bloc de transmission d'énergie sans contact est placé dans une cavité formant ledit espace inférieur.

L'invention concerne également un procédé d'installation d'une infrastructure fonctionnalisée telle que définie ci-dessus, ledit procédé comportant les étapes suivantes :
- Réalisation d'au moins une cavité dans la chaussée ;
- Positionnement du deuxième bloc de transmission d'énergie sans contact au fond de ladite cavité de manière à orienter le deuxième enroulement vers le haut de la cavité ;
- Fermeture de la cavité par ledit premier bloc de transmission d'énergie sans contact associé à un module générateur et/ou consommateur d'énergie électrique, en orientant le premier enroulement vers l'intérieur de la cavité et en-vis vis-à-vis du deuxième enroulement ;
- Traction du deuxième bloc de transmission d'énergie sans contact à l'aide de l'organe de préhension pour le déplacer de la position non fonctionnelle vers la position fonctionnelle.

### Brève description des figures

D'autres caractéristiques et avantages vont apparaître dans la description détaillée qui suit faite en regard des dessins annexés dans lesquels :
- La figure 1 illustre le principe de réalisation d'une dalle photovoltaïque utilisant un système de liaison électrique sans contact ;
- Les figures 2A et 2B représentent les deux parties d'un système de liaison électrique sans contact employées dans une dalle de type photovoltaïque ;
- Les figures 3A à 3C illustrent le principe de réalisation d'une infrastructure photovoltaïques à base de dalles photovoltaïques fonctionnant à l'aide d'un système de liaison électrique sans contact ;
- Les figures 4A à 4C illustrent le principe de réalisation de la solution de l'invention ;
- La figure 5 représente une réalisation particulière du système de l'invention ;

### Description détaillée d'au moins un mode de réalisation

L'invention vise un système de liaison électrique sans contact. Par sans contact, on entend une liaison électrique réalisée par couplage magnétique entre un enroulement primaire E1 et un enroulement secondaire E2 isolés entre eux. L'isolation entre les deux enroulements peut être réalisée par de l'air et/ou par une ou plusieurs pièces isolantes de l'électricité positionnées entre eux.

De manière non limitative, le système peut notamment être employé dans une infrastructure fonctionnalisée qui comporte :
- Des dalles photovoltaïques positionnées sur une chaussée 5 afin de fonctionnaliser la chaussée pour générer de l'énergie électrique grâce à l'énergie solaire ;
- Des dalles à fonction de signalisation positionnées sur une chaussée 5, comportant par exemple des diodes lumineuses fournissant un éclairage ;
- Toute autre solution requérant une mise en service à l'aveugle de la liaison électrique sans contact, c'est-à-dire sans accès aisé à l'un des deux blocs utilisés pour établir la liaison électrique sans contact ;

Les différents aspects de l'invention sont explicités et représentés sur les figures annexées dans le cadre d'une installation de type photovoltaïque, mais cette application est à considérer de manière non limitative.

Pour la suite de la description, on définit une direction principale, dite de traction, suivant un axe (A) qui est perpendiculaire au plan de couplage des deux parties du système.

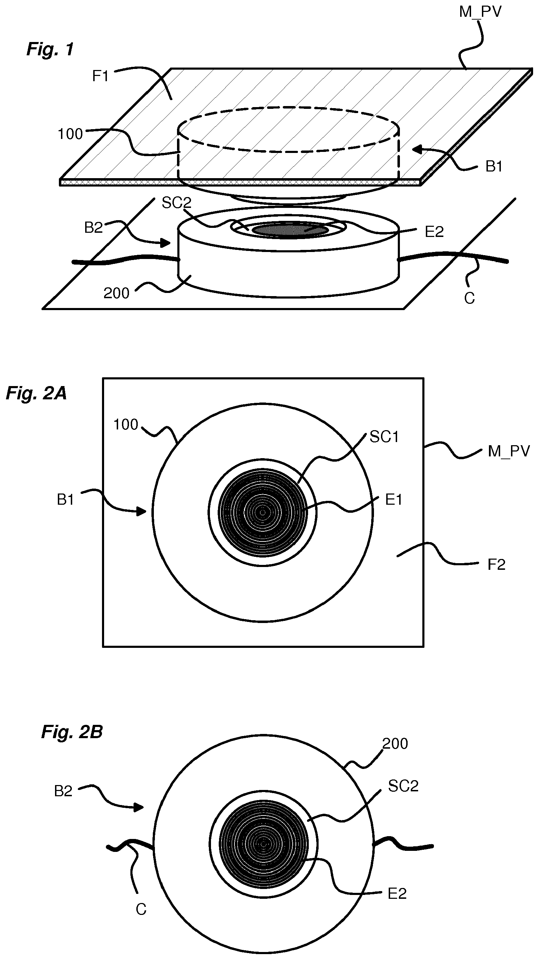

En référence à la figure 1 et aux figures 2A et 2B, un système de liaison électrique sans contact comporte un premier bloc B1 de transmission d'énergie sans contact.

Le premier bloc B1 de transmission d'énergie sans contact peut comporter un coupleur inductif primaire doté de l'enroulement primaire E1 et présentant une première surface de couplage SC1.

Le système de liaison électrique sans contact comporte un deuxième bloc B2 de transmission d'énergie sans contact.

Le deuxième bloc B2 comporte un coupleur inductif secondaire doté de l'enroulement secondaire E2 et présentant une deuxième surface de couplage SC2.

L'enroulement primaire E1 peut être réalisé par sérigraphie sur une première carte de circuit imprimé ou par toute autre solution connue. La première carte de circuit imprimé est agencée pour positionner ledit enroulement primaire E1 de manière adaptée dans un premier boîtier 100 en vue de réaliser ladite première surface de couplage SC1.

L'enroulement secondaire E2 peut être réalisé par sérigraphie sur une deuxième carte de circuit imprimé ou par toute autre solution connue.

La deuxième carte est agencée pour positionner ledit enroulement secondaire E2 de manière adaptée dans un deuxième boîtier 200 en vue de réaliser ladite deuxième surface de couplage SC2.

Bien entendu, les termes "primaire" et "secondaire" sont à comprendre de manière non limitative et en tenant compte du sens de transmission de l'énergie électrique, selon que l'installation est génératrice d'énergie électrique ou réceptrice d'énergie électrique. Selon l'application visée, le primaire peut en effet devenir le secondaire et le secondaire devenir le primaire.

Dans une infrastructure fonctionnalisée composée de dalles à positionner sur une chaussée, le premier bloc B1 du système est associé à un module générateur et/ou consommateur d'énergie électrique.

A titre d'exemple, sur les figures annexées, il peut s'agir d'un module générateur d'énergie électrique tel que par exemple un module photovoltaïque M_PV qui présente une face externe F1 destinée à capter une énergie lumineuse et une face interne F2 sur laquelle est fixé ledit premier bloc B1. L'ensemble formé du bloc B1 et du module M_PV peut se présenter sous la forme d'une dalle qu'il est possible de coller sur la chaussée 5.

Le bloc B1 peut intégrer un bloc 12 de conversion électrique destiné à réaliser une conversion de type DC/AC. Le convertisseur de type DC/AC est ainsi connecté d'une part aux bornes du module photovoltaïque 11 et d'autre part au coupleur inductif primaire. L'énergie électrique générée par les cellules photovoltaïques du module M_PV est ainsi transmise par le coupleur inductif primaire vers le coupleur inductif secondaire via la liaison électrique sans contact.

Le premier bloc B1 et le deuxième bloc B2 sont avantageusement réalisés chacun sous une forme monobloc, c'est-à-dire qu'ils intègrent chacun dans un boîtier ou dans plusieurs boîtiers solidaires entre eux tous les éléments nécessaires à leur fonctionnement. Le module générateur et/ou consommateur d'énergie électrique est fixé sur ledit premier bloc B1.

Le système est dit dans un état de fonctionnement opérationnel lorsque son premier bloc B1 et son deuxième bloc B2 sont positionnés l'un par rapport à l'autre de sorte que la première surface de couplage SC1 et la deuxième surface de couplage SC2 soient placées en vis-à-vis d'une manière suffisamment stable pour maximiser le rendement et le transfert d'énergie entre l'enroulement primaire E1 et l'enroulement secondaire E2. Par le terme en vis-à-vis, on entend que les deux surfaces de couplage sont avantageusement sensiblement parallèles entre elles et séparées l'une de l'autre d'une distance (suivant l'axe (A)) qui est suffisante et adaptée pour obtenir un couplage magnétique au moins satisfaisant, avantageusement maximal.

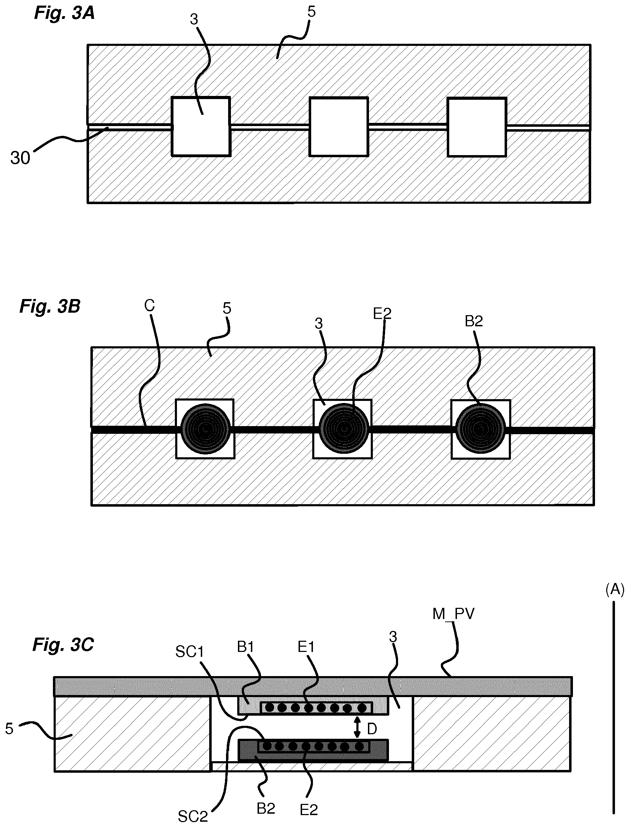

De manière non limitative, comme illustré par les figures 3A à 3C, l'installation du système peut être réalisée en plaçant le deuxième bloc B2 au fond d'une cavité 3 ou renfoncement réalisée dans la chaussée 5, la deuxième surface de couplage SC2 étant orientée vers le haut de la cavité et en positionnant ledit premier bloc B1 pour refermer la cavité 3 en orientant la première surface SC1 de couplage vers l'intérieur de la cavité 3 et donc vers la deuxième surface de couplage SC2, le module photovoltaïque M_PV étant alors monté en surface pour capter l'énergie solaire, sa face externe F1 orientée vers l'extérieur (figure 3C). Les principes mécaniques seront semblables pour toute autre application, notamment si le premier bloc B1 est associé à un module consommateur d'énergie électrique, tel que par exemple une dalle lumineuse. Pour l'installation de dalles photovoltaïques sur une chaussée, plusieurs cavités 3 sont réalisées, chacune destinée à une dalle photovoltaïque distincte. Des tranchées 30 sont également réalisées entre les cavités pour faire cheminer les câbles C et connecter les blocs B2 entre eux.

On comprend de l'agencement décrit ci-dessus que lorsque le premier bloc B1 et le module M_PV associé viennent recouvrir le deuxième bloc B2 placé au fond de la cavité 3, l'accès au deuxième bloc n'est plus possible et la surface SC2 est alors éloigné de la surface SC1 d'une distance D (figure 3C). Or il est souvent nécessaire de rapprocher les deux enroulements au maximum (tout en restant dans le cadre d'une liaison sans contact mécanique/électrique entre les deux) afin d'améliorer le rendement de la liaison. En effet, si l'alignement n'est pas idéal (précision nécessaire de 1 à 2 mm suivant un axe horizontal) ou si l'éloignement est trop important entre le primaire et le secondaire (précision de 5 à 10 mm suivant un axe vertical) le rendement et le fonctionnement du système de liaison électrique sans contact pourront être altérés.

Le premier bloc B1 délimite ainsi un espace inférieur formé de la cavité 3 dans laquelle est placé le deuxième bloc B2 et un espace supérieur situé au-dessus. L'un des objectifs de l'invention est d'accéder à l'espace inférieur et donc au deuxième bloc pour le tirer vers le premier bloc B1 situé au-dessus alors que l'accès au deuxième bloc n'est plus possible car la cavité est recouverte par le premier bloc et par le module photovoltaïque M_PV.

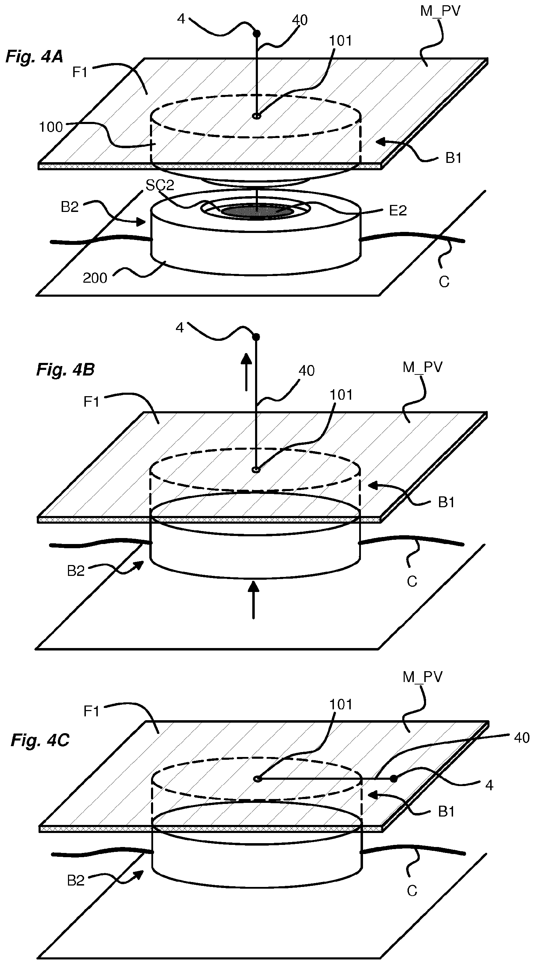

Le deuxième bloc B2 peut ainsi être dans au moins deux positions distinctes :
- Une position dite non fonctionnelle, dans laquelle la liaison électrique sans contact entre les deux enroulements E1, E2 n'est pas établie (figure 4A) ;
- Une position fonctionnelle dans laquelle la liaison électrique sans contact par couplage magnétique est établie entre les deux enroulements (figure 4B) ;

La position fonctionnelle du deuxième bloc B2 de transmission d'énergie sans contact peut être atteinte par butée mécanique du deuxième bloc B2 contre le premier bloc B1 situé au-dessus.

L'invention vise ainsi à permettre de déplacer le deuxième bloc B2 du système de sa position non fonctionnelle vers sa position fonctionnelle et donc à permettre d'établir la liaison sans contact entre les deux enroulements E1, E2 pour maximiser le rendement, alors que le deuxième bloc n'est plus aisément accessible.

Pour passer de sa position non fonctionnelle à sa position fonctionnelle, le deuxième bloc est déplacé en translation suivant l'axe (A).

Pour ce déplacement, le système comporte des moyens de traction comprenant au moins un organe de préhension 4 disponible dans l'espace supérieur et au moins un dispositif de liaison reliant ledit organe de préhension au deuxième bloc situé dans l'espace inférieur.

En référence aux figures 4A à 4C, le dispositif de liaison peut se présenter sous la forme d'un câble 40 souple ou d'une tige rigide ou de toute autre solution permettant d'assurer la liaison. Le premier bloc B1 comporte ainsi une ouverture 101 destinée à être traversée par ledit câble 40 de manière à ce que celui-ci établisse la liaison entre l'espace supérieur et l'espace inférieur. En cas de présence d'un dispositif associé et fixé au premier bloc B1, tel que par exemple un module photovoltaïque M_PV, une ouverture correspondante est réalisée à travers le module pour assurer le passage du câble. Les ouvertures sont dimensionnées pour que le câble puisse coulisser.

Une traction sur l'organe de préhension 4 permet de faire remonter le deuxième bloc B2 de sa position non fonctionnelle vers sa position fonctionnelle.

Des moyens de verrouillage peuvent être prévus pour assurer le maintien du deuxième bloc B2 dans sa position fonctionnelle et assurer un couplage magnétique constant entre les deux enroulements.

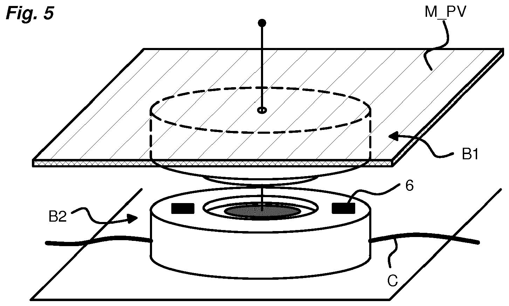

Ces moyens de verrouillage peuvent comporter :
- Un dispositif magnétique en deux parties agencées d'une part sur le premier bloc et sur le deuxième bloc et coopérant entre elles par effet magnétique pour maintenir le deuxième bloc dans sa position fonctionnelle ; A titre d'exemple, la figure 5 montre par exemple la disposition d'aimants permanents 6 sur le deuxième bloc B2, destinés à coopérer avec des pièces magnétiques présentes sur le premier bloc B1 ;
- Une colle appliquée sur l'un et/ou l'autre des deux blocs ;
- Une solution de type velcro en deux parties réparties sur les deux blocs ;
- Une solution de fixation mécanique par exemple par emboîtement et verrouillage par quart de tour ou par une liaison mécanique de type languette/encoche ;
- Dans le cas d'une solution intégrée à une route, le béton injecté dans la saignée peut venir combler l'espace sous le deuxième bloc et le maintenir définitivement en place ;
- En employant un organe de préhension réalisé dans un matériau à déformation plastique. Le maintien est ainsi assuré pendant le séchage du béton par un pliage de l'organe de préhension directement au-dessus du panneau. Une fois le béton sec ou pris, l'organe de préhension peut être coupé à ras.

Selon un aspect particulier de l'invention, les deux blocs de transmission d'énergie sans contact peuvent coopérer mécaniquement entre eux par des formes d'emboîtement complémentaires lorsque le deuxième bloc B2 de transmission d'énergie sans contact est dans sa position fonctionnelle. Il peut s'agir d'une simple liaison de type mâle-femelle. Les deux surfaces de couplage SC1 et SC2 sont réalisées chacune sur une partie distincte de cette connectique sans contact de type mâle-femelle. Le premier bloc B1 de transmission d'énergie sans contact peut présenter une proéminence à bout plan définissant la première surface de couplage S1 et le deuxième bloc B2 de transmission d'énergie sans contact peut ainsi comporter un renfoncement présentant un fond plan formant la deuxième surface de couplage SC2 et dimensionné pour venir s'adapter directement sur la proéminence du premier bloc B1.

## Revendications

1. Système de liaison électrique sans contact comprenant un premier bloc (B1) de transmission d'énergie sans contact portant un premier enroulement (E1) électrique et un deuxième bloc (B2) de transmission d'énergie sans contact portant un deuxième enroulement (E2) électrique, le premier bloc (B1) de transmission d'énergie sans contact fermant une cavité dans laquelle est placé ledit deuxième bloc (B2) de transmission d'énergie sans contact, et délimitant un premier espace, dit espace supérieur, situé au-dessus du premier bloc de transmission d'énergie sans-contact et un deuxième espace, dit espace inférieur, formant ladite cavité et situé au-dessous du premier bloc de transmission d'énergie sans contact, ledit deuxième bloc (B2) de transmission d'énergie sans contact étant destiné à être déplacé en translation suivant une direction principale par rapport audit premier bloc (B1) de transmission d'énergie sans contact dans ledit espace inférieur entre une position non fonctionnelle et une position fonctionnelle, dans laquelle une transmission d'énergie par couplage magnétique entre les deux enroulements peut être assurée, **caractérisé en ce qu'**il comporte des moyens de traction du deuxième bloc (B2) de transmission d'énergie sans contact pour le déplacer suivant une direction de traction de sa position non fonctionnelle vers sa position fonctionnelle et **en ce que** lesdits moyens de traction comportent au moins un organe de préhension (4) situé dans ledit espace supérieur et au moins un dispositif de liaison reliant ledit organe de préhension audit deuxième bloc (B2) de transmission d'énergie sans contact situé dans ledit espace inférieur.

2. Système selon la revendication 1, **caractérisé en ce que** le premier bloc (B1) de transmission d'énergie sans contact comporte au moins un premier boîtier (100) portant le premier enroulement (E1) et **en ce que** le deuxième bloc (B2) de transmission d'énergie sans contact comporte au moins un deuxième boîtier (200) mobile portant le deuxième enroulement (E2).

3. Système selon la revendication 2, **caractérisé en ce que** ledit premier boîtier est doté d'une ouverture (101) et **en ce que** ledit dispositif de liaison comporte au moins un câble (40) qui traverse ladite ouverture.

4. Système selon l'une des revendications 1 à 3, **caractérisé en ce qu'**il comporte des moyens de verrouillage de la translation dudit deuxième bloc (B2) de transmission d'énergie sans contact dans sa position fonctionnelle, suivant ladite direction de traction.

5. Système selon la revendication 4, **caractérisé en ce que** les moyens de verrouillage comportent un dispositif magnétique comprenant une première partie solidaire du premier bloc (B1) de transmission d'énergie sans contact et une deuxième partie solidaire du deuxième bloc (B2) de transmission d'énergie sans contact.

6. Système selon la revendication 4, **caractérisé en ce que** les moyens de verrouillage comportent une colle appliquée sur l'un et/ou l'autre des deux blocs de transmission d'énergie sans contact.

7. Système selon la revendication 4, **caractérisé en ce que** ledit organe de préhension est réalisé dans un matériau déformable de manière plastique.

8. Système selon l'une des revendications 1 à 7, **caractérisé en ce que** le premier bloc (B1) de transmission d'énergie sans contact et le deuxième bloc (B2) de transmission d'énergie sans contact comportent des formes complémentaires d'emboîtement.

9. Infrastructure fonctionnalisée destinée à recouvrir une chaussée (5), et comportant un ou plusieurs modules générateur et/ou consommateur d'énergie électrique disposés de manière contigües pour former des dalles et en ce qu'elle comporte un système de liaison électrique sans contact tel que défini dans l'une des revendications 1 à 8 associé à chaque module générateur et/ou consommateur d'énergie électrique et en ce que ledit premier bloc (B1) de transmission d'énergie sans contact est fixé au module et ledit deuxième bloc (B2) de transmission d'énergie sans contact est placé dans une cavité formant ledit espace inférieur.

10. Procédé d'installation d'une infrastructure fonctionnalisée telle que définie dans la revendication 9, **caractérisé en ce qu'**il comporte les étapes suivantes :
- Réalisation d'au moins une cavité (3) dans la chaussée ;
- Positionnement du deuxième bloc (B2) de transmission d'énergie sans contact au fond de ladite cavité (3) de manière à orienter le deuxième enroulement vers le haut de la cavité ;
- Fermeture de la cavité par ledit premier bloc (B1) de transmission d'énergie sans contact associé à un module générateur et/ou consommateur d'énergie électrique, en orientant le premier enroulement (E1) vers l'intérieur de la cavité et en-vis vis-à-vis du deuxième enroulement (E2) ;
- Traction du deuxième bloc (B2) de transmission d'énergie sans contact à l'aide de l'organe de préhension (4) pour le déplacer de la position non fonctionnelle vers la position fonctionnelle.
